(19) Europäisches Patentamt / European Patent Office / Office européen des brevets

(11) **EP 2 718 670 B1**

(12) **FASCICULE DE BREVET EUROPEEN**

(45) Date de publication et mention
de la délivrance du brevet:
**23.12.2020 Bulletin 2020/52**

(21) Numéro de dépôt: **12729073.2**

(22) Date de dépôt: **07.06.2012**

(51) Int Cl.:
***G01C 17/38*** *(2006.01)*    ***G01C 21/16*** *(2006.01)*

(86) Numéro de dépôt international:
**PCT/EP2012/060792**

(87) Numéro de publication internationale:
**WO 2012/168357 (13.12.2012 Gazette 2012/50)**

(54) **PROCEDE D'ESTIMATION SIMPLIFIE DE L'ORIENTATION D'UN OBJET ET CENTRALE D'ATTITUDE METTANT EN OEUVRE UN TEL PROCEDE**

VEREINFACHTES VERFAHREN ZUR SCHÄTZUNG DER AUSRICHTUNG EINES OBJEKTS UND LAGESENSOR ZUR DURCHFÜHRUNG DIESES VERFAHRENS

SIMPLIFIED METHOD FOR ESTIMATING THE ORIENTATION OF AN OBJECT, AND ATTITUDE SENSOR IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **07.06.2011  FR 1154915**

(43) Date de publication de la demande:
**16.04.2014  Bulletin 2014/16**

(73) Titulaire: **Movea**
**38000 Grenoble (FR)**

(72) Inventeurs:
  • **FLAMENT, Yanis**
    **F-38134 Saint Julien De Ratz (FR)**
  • **CARITU, Yanis**
    **F-38134 Saint Joseph La Riviere (FR)**
  • **AUJAY, Grégoire**
    **F-38100 Grenoble (FR)**

(74) Mandataire: **Marks & Clerk France**
**Immeuble "Visium"**
**22, avenue Aristide Briand**
**94117 Arcueil Cedex (FR)**

(56) Documents cités:
**WO-A1-2009/127561    WO-A1-2010/007160**
**US-A1- 2010 250 177**

• **SABATINI A M: "Quaternion-based extended Kalman filter for determining orientation by inertial and magnetic sensing", IEEE TRANSACTIONS ON BIOMEDICAL ENGINEERING, IEEE SERVICE CENTER, PISCATAWAY, NJ, USA, vol. 53, no. 7, 1 juillet 2006 (2006-07-01), pages 1346-1356, XP002522559, ISSN: 0018-9294, DOI: 10.1109/TBME.2006.875664 cité dans la demande**

**EP 2 718 670 B1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention se rapporte à un procédé d'estimation de l'orientation d'un objet dans l'espace, animé ou non d'une accélération propre et soumis ou non à une perturbation magnétique (variations inconnues autour d'un champ principalement uniforme dans l'environnement proche et constant dans le temps), et à un dispositif mettant en œuvre un tel procédé.

L'estimation de l'orientation permet de résoudre toute une classe de problèmes.

L'obtention de l'orientation nécessite généralement la mise en œuvre de plusieurs modalités de capteurs, faisant partie d'un ensemble désigné par dispositif de capture de mouvement, également désigné par centrale d'attitude.

Des capteurs MEMS (« Micro-Electro-Mechanical Systems » ou microsystèmes électromécaniques) peuvent être utilisés pour constituer cette centrale, ceux-ci présentent l'avantage d'être peu encombrants et de coût réduit. Le capteur offrant une telle combinaison de capteurs MEMS est souvent désigné sous le nom de centrale inertielle ou IMU en anglais (Inertial Measurement Unit). Une centrale d'attitude est une centrale inertielle augmentée des moyens de traitement nécessaires pour obtenir l'orientation. L'emploi de tels capteurs MEMS permet d'envisager l'utilisation de centrales d'attitude dans des domaines d'applications variés, notamment le domaine biomédical, pour la surveillance des personnes âgées à domicile, la rééducation fonctionnelle, dans le domaine sportif, pour l'analyse des mouvements des sportifs, dans les domaines automobile, robotique, de la réalité virtuelle, de l'animation en trois dimensions et plus généralement dans tout domaine dans lequel on cherche à déterminer ou à observer un mouvement.

Cependant, par rapport à des capteurs non MEMS (notamment des capteurs de fabrication classique, non issus des micro-technologies et utilisés par exemple, dans le domaine de la navigation), ces capteurs MEMS sont très peu onéreux mais ont pour inconvénients d'être relativement peu performants, bruités et biaisés.

Actuellement il existe plusieurs méthodes pour obtenir, à partir de mesures fournies par des accéléromètres, des magnétomètres et des gyromètres, une estimation de l'orientation de l'objet. Il existe notamment des méthodes mettant en œuvre un observateur, qui permettent de fusionner une information double : celle provenant des mesures fournies par les capteurs et celle provenant d'un modèle d'évolution, et ceci tout en maintenant un temps de calcul compatible avec une implémentation en temps réel sur des processeurs relativement puissant (PC, Smartphone).

Les méthodes connues mettant en œuvre un observateur reposent principalement sur l'utilisation d'un filtre de Kalman. L'avantage de cette technique est de permettre la fusion des données tout en tenant compte de la qualité de l'information apportée par les mesures fournies par les capteurs et de la qualité du modèle d'évolution des états cinétiques. Parmi les différents types de filtre de Kalman, on utilise particulièrement le filtre de Kalman étendu (« Extended Kalman Filter » ou EKF en terminologie anglo-saxonne) ; celui-ci est rapide et simple à mettre en œuvre, une de ses applications à la capture de mouvement est notamment décrite dans le document « Quaternion-based extended Kalman filter for détermination orientation by inertial and magnetic sensing », SABATINI A.M., IEEE Transactions on Biomedical Engineering, 2006, 53(7).

Outre le choix du filtre, la qualité des mesures injectées dans le filtre a une grande importance, et notamment la confiance qu'on accorde à leur valeur.

En effet, les mesures comportent une partie informative directement liée à l'orientation de l'objet en mouvement et une partie perturbatrice dont la nature dépend du capteur considéré. Au premier ordre, il s'agit des accélérations propres pour les mesures fournies par les accéléromètres, des perturbations magnétiques pour les mesures délivrées par le magnétomètre et le biais pour les gyromètres. Il faut également prendre en compte le bruit de mesure. Cependant celui-ci est classiquement traité dans le filtre.

Il existe plusieurs méthodes pour traiter les perturbations. On peut notamment ne pas ternir compte des mesures perturbées, mais dans le cas où les mesures de plusieurs capteurs présentent simultanément une perturbation, l'observateur n'a plus assez d'informations pour proposer une estimation correcte de l'orientation. On peut également inclure une représentation des perturbations dans le vecteur et le modèle d'état du filtre de Kalman pour les estimer conjointement avec les paramètres de l'attitude du solide. Toutefois, l'estimation conjointe des perturbations et de l'orientation s'avère délicate du fait d'un manque d'observabilité. Elle nécessite en outre le réglage d'un grand nombre de paramètres, ce qui complexifie sa mise en œuvre.

Ces inconvénients ont été surmontés par la demande de brevet internationale publiée sous le n°WO2010/007160, dont la demanderesse est co-titulaire, qui offre un procédé d'estimation de l'orientation fournissant une estimation précise de l'orientation, en présence ou non d'accélérations propres et de perturbations magnétiques, et ceci de manière simplifiée par rapport aux procédés existants. Le but énoncé précédemment est atteint par un procédé d'estimation de l'orientation sur la base de mesures selon les trois axes de l'espace de l'accélération, du champ magnétique et de la vitesse de rotation, comportant :

- une étape de prétraitement de ces mesures pour détecter l'existence d'une perturbation et estimer des mesures non perturbées, et
- une étape d'estimation de l'orientation sur la base des valeurs de mesures issues de l'étape de prétraitement.

Ce procédé présente cependant l'inconvénient de nécessiter l'utilisation d'une puissance de calcul importante qui n'est pas disponible dans un microcontroleur.

C'est le but de la présente invention de procurer un procédé d'estimation des paramètres d'attitude d'un solide en mouvement, instrumenté par des capteurs de type accéléromètre, gyromètre et magnétomètre, qui remplace la plupart des étapes de calcul du filtre de Kalman par une prise en compte directe de mesures desdits capteurs, corrigées ou non, selon que des perturbations sont détectées ou pas, dans le vecteur d'état.

A cet effet, la présente invention divulgue un procédé d'estimation de l'orientation d'un objet comprenant un centrale d'attitude, à un instant k, selon la revendication 1.

Des options avantageuses du procédé sont décrites dans les revendications dépendantes 2-15.

La présente invention divulgue également une centrale d'attitude d'un objet, selon la revendication 16.

L'invention présente est utilisable pour toutes les combinaisons de capteurs comportant :

- au moins un capteur apte à restituer une information représentative de la vitesse angulaire (par exemple : un gyroscope, un couple d'accéléromètres séparés par un bras de levier, ...)
- et au moins un capteur apte à restituer une information représentative d'un champ physique $P_0$ principalement uniforme et constant dans le temps et l'espace

Le dispositif de l'invention sera préférablement composé d'un gyroscope, d'un accéléromètre (apte à mesurer le champ terrestre gravitationnel $G_0$) et d'un magnétomètre (apte à mesurer le champ terrestre magnétique $H_0$). L'invention présente l'avantage de permettre une estimation de la vraie accélération.et des vraies perturbations magnétiques :

MesuresAccelero=MatriceOrientation*(AccVraie-Go(0,0,1))
AccVraie=Transpose(MatriceOrientation)*MesuresAccelero+Go(0,0,1).

L'invention présente en outre l'avantage de permettre le choix des capteurs dont les mesures sont à privilégier en fonction de différents cas d'emploi.

Notamment, dans le cas où une perturbation est détectée sur l'accéléromètre ou le magnétomètre, on privilégie les sorties de l'autre capteur et on réalise un traitement adapté qui est compatible avec une faible capacité de calcul et avec une faible capacité mémoire.

Dans certains de ses modes de réalisation, l'invention peut être avantageusement mise en œuvre en prévoyant une fenêtre d'analyse d'une durée permettant de tester suffisamment l'occurrence de perturbation.

La présente invention sera mieux comprise à l'aide de la description qui va suivre et des dessins en annexe, sur lesquels :

- la figure 1 représente une architecture fonctionnelle de mise en oeuvre du procédé selon l'art antérieur pour l'échantillon k ;
- la figure 2 représente une architecture fonctionnelle de mise en oeuvre du procédé de l'invention pour l'échantillon k, dans un de ses modes de réalisation ;
- la figure 2b représente une variante de l'architecture fonctionnelle de la figure 2, dans certains de ses modes de réalisation ;
- la figure 3 représente un détail de la figure 2b ;
- les figures 4a à 4g représentent des mesures réalisées sur un accéléromètre lors de la mise en œuvre de l'invention dans l'architecture de la figure 2b ;
- les figures 5a à 5f représentent des mesures réalisées sur un magnétomètre lors de la mise en œuvre de l'invention dans l'architecture de la figure 2b.

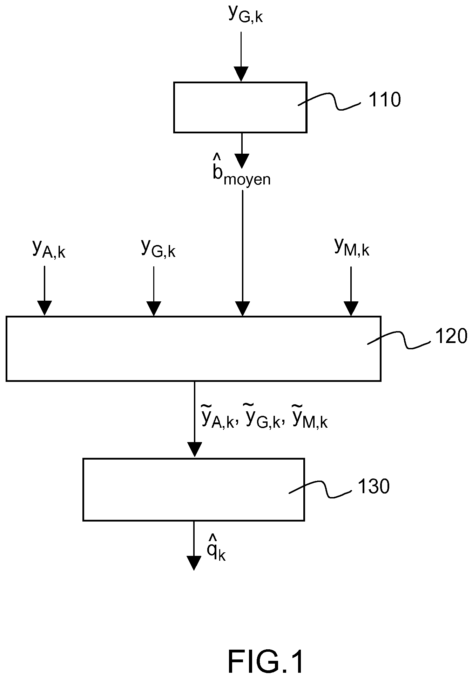

La figure 1 représente une architecture fonctionnelle de mise en oeuvre du procédé selon l'art antérieur pour l'échantillon k.

Cette figure illustre la mise en œuvre du procédé divulgué par la demande internationale publiée sous le n°WO2010/007160, dont les notations et certaines étapes sont utilisées dans le cadre de la mise en œuvre de la présente invention.

On souhaite obtenir l'orientation d'un objet se déplaçant dans l'espace, par exemple l'orientation d'une personne (si le capteur est disposé sur le buste ou à la ceinture) ou d'un segment d'une personne (si le capteur est disposé sur la partie du corps à laquelle on s'intéresse). Pour cela, on utilise une centrale d'attitude comportant des capteurs aptes à fournir des mesures de l'accélération totale, de champ magnétique et de la vitesse de rotation selon les trois axes de l'espace. Les capteurs sont avantageusement des capteurs MEMS offrant un prix de revient réduit et un encombrement limité.

Ce procédé de l'art antérieur comporte une étape 110 d'initialisation de la centrale d'attitude, une étape 120 de prétraitement des mesures fournies par les capteurs et une troisième étape de traitement 130 par un observateur, de type Extended Kalman Filter ou EKF.

Selon l'invention, on peut diversifier les capteurs ; par exemple, pour la mesure de l'accélération, le système peut être constitué d'un accéléromètre tri axe ou de trois accéléromètres mono axe fournissant une mesure sur chacun des axes.

Notre invention décrit principalement le procédé utilisant les trois modalités de mesures précitées mais le raisonnement est le même pour un autre triplet de capteurs.

Les propriétés minimales du dispositif doivent, de manière privilégiée, être les suivantes :

- Un capteur de mesure $y_G$ à au moins un axe sensible, apte à restituer une mesure liée à la vitesse angulaire $\omega$ par un modèle identifiable ;
- Un capteur de mesure $y_A$ à au moins un axe sensible apte à restituer une mesure d'un champ de référence $G_0$ fixe dans le repère de référence et identifiable à un moment donné, auquel peut s'ajouter une variation **a** de même nature que $G_0$ mais non connue a priori ;

Préférablement, ces capteurs sont respectivement : un gyromètre et un accéléromètre ou un magnétomètre. Il faut noter que dans le procédé s'appuyant sur le précédent dispositif, une étape de construction d'une mesure d'un champ physique synthétique orthogonal à $G_0$ sera alors réalisée.

Un dispositif préférable un peu plus coûteux mais plus performant possède les propriétés minimales suivantes :

- Un capteur de mesure $y_G$ à au moins un axe sensible, apte à restituer une mesure liée à la vitesse angulaire $\omega$ par un modèle identifiable ;
- Un capteur de mesure $y_A$ à au moins un axe sensible apte à restituer une mesure d'un champ de référence $G_0$ fixe dans le repère de référence et identifiable à un moment donné, auquel peut s'ajouter une variation **a** de même nature que $G_0$ mais non connue a priori ;
- Un capteur de mesure $y_M$ à au moins un axe de mesure apte à restituer une mesure d'un champ de référence $H_0$ fixe dans le repère de référence et identifiable à un moment donné, auquel peut s'ajouter une variation **m** de même nature que $G_0$ mais non connue a priori. Préférablement, ces capteurs sont respectivement : un gyromètre, un accéléromètre et un magnétomètre.

Il faut noter que ces trois types de capteurs fournissent des informations complémentaires en vue d'une meilleure estimation de l'orientation, notamment si l'on dispose de capteurs tri-axiaux :

- Le gyromètre, si on l'intègre, apporte des informations angulaires à trois degrés de liberté, mais en relatif, c'est-à-dire avec une propension à la dérive si ledit gyromètre est utilisé seul ;
- L'accéléromètre apporte deux degrés de liberté angulaires absolus (roll et pitch), qui sont accessibles en statique si ledit accéléromètre est utilisé seul ;
- Le magnétomètre apporte deux degrés de liberté angulaires (dont le lacet ou yaw), qui sont accessibles dans un contexte non perturbé magnétiquement si ledit magnétomètre est utilisé seul.

On peut généraliser la présente invention qui reste valable pour tout capteur axial apte à mesurer une direction uniforme de l'espace pour remplacer les capteurs de mesure du champ physique apportant une information additionnelle au gyroscope.

On pense notamment aux mesures de DOA (Direction of Arrivai) pour tout type d'ondes électromagnétiques, en particulier les champs d'ondes émis par les balises que les opérateurs de téléphonie mobile utilisent pour mailler l'espace de couverture de réseau, ou des cellules photoélectriques selon des modalités divulguées par la demande de brevet européenne publiée sous le n° EP1984696). Il peut s'agir aussi d'un dispositif utilisant des ondes ultrasonores planes provenant d'une source lointaine et dont la direction est mesurée et joue le rôle du champ physique.

Un des avantages du couple accéléromètre-magnétomètre est la capacité de chacun de ces deux capteurs à fournir ces deux DDL complémentaires. On peut cependant très bien utiliser d'autres capteurs vectoriels qui se complémentent de la même manière. L'accéléromètre est cependant nécessaire si on veut estimer l'accélération propre, la vitesse linéaire ou la position...

Pour les mesures de champ magnétique, les capteurs privilégiés peuvent être un magnétomètre tri axe ou trois magnétomètres mono axe.

Pour la mesure de la vitesse de rotation, les capteurs privilégiés peuvent être trois gyromètres mono axe, avantageusement deux gyromètres bi axe ou un gyromètre tri axe.

Les triaxes peuvent être alignés ou non, dans ce dernier cas l'orientation relative entre les axes doit être connue.

Dans la suite de la description, à des fins de simplicité, nous désignerons le ou les accéléromètres, par un accéléromètre, le ou les magnétomètres par un magnétomètre et le ou les gyromètres par un gyromètre. Ces capteurs sont attachés à l'objet dont on souhaite connaître l'orientation.

Nous disposons des mesures **Y,** que nous modélisons en notations vectorielles par :

$$\begin{cases} \mathbf{Y_A} = {}_{G}^{L}\mathbf{R}\left({}^{G}\mathbf{G_0} + {}^{G}\mathbf{a}\right) + \mathbf{v_A} \\ \mathbf{Y_M} = {}_{G}^{L}\mathbf{R}\left({}^{G}\mathbf{H_0} + {}^{G}\mathbf{h}\right) + \mathbf{v_M} \\ \mathbf{Y_G} = {}^{L}\boldsymbol{\omega} + \mathbf{b} + \mathbf{v_G} \end{cases} \tag{1}$$

Où les préfixes *L* et *G* précisent si le vecteur est exprimé dans le repère global {G} fixe ou dans le repère local {*L*} mobile. avec :

$Y_A$ : mesure tri-axe de l'accélération totale fournie par l'accéléromètre,

$Y_M$ : mesure tri-axe du champ magnétique fournie par le magnétomètre,

$Y_G$ : mesure tri-axe de la vitesse de rotation fournie par le gyromètre, notée également $\omega$

${}_{G}^{L}\mathbf{R}$ : est la matrice de passage du repère global au repère local (matrice de rotation),

$G_0$ : champ de gravité terrestre (vecteur 3x1), exprimé dans le repère fixe en général, soit (0,0,1),

$H_0$: champ magnétique terrestre (vecteur 3x1), également exprimé dans le repère fixe en général, soit (0.5 ; 0 ; $\frac{\sqrt{3}}{2}$)

$\omega$ : vitesse angulaire,

**a** : accélérations propres ou variations perturbatrices d'accélération.

**h** : perturbations magnétiques,

**b** : biais du gyromètre,

$v_A$ : bruit de mesure de l'accéléromètre,

$v_M$ : bruit de mesure du magnétomètre,

$v_G$ : bruit de mesure du gyromètre.

L'orientation est estimée par rapport à un repère de référence, entièrement défini par la donnée des vecteurs

$G_0$ et $H_0$. Par exemple, le repère géocentrique est défini par les vecteurs $\mathbf{G_0}$ (0 ; 0 ; 1) et $\mathbf{H_0}$ (0.5 ; 0 ; $\frac{\sqrt{3}}{2}$)

A des fins de simplicité, nous ne distinguerons pas les mesures selon les trois directions de l'espace. Comme cela apparaît clairement au vu de la définition mathématique des mesures (voir par exemple : Harold D. Black. A passive system for determining the attitude of a satellite. American Institute of Aeronautics and Astronautics Journal, 2(7):1350-1351, July 1964), chacune de ces mesures comporte respectivement une première partie « $RG_O$ », « $R.H_O$ » et $\omega$, qui contient l'information permettant d'obtenir une estimation de l'orientation, une deuxième partie *a, d et b* qui représente les perturbations éventuelles pouvant apparaître, de façon aléatoire dans les mesures, et enfin une troisième partie $v_A$, $v_M$, $v_G$ représentant le bruit de mesure au niveau de chaque capteur.

On commence par définir ci-dessous les conventions de notation utilisées dans la suite des développements .

On utilise de manière préférentielle les quaternions pour la représentation des grandeurs. Il existe plusieurs notations de quaternions. La notation académique est celle de Hamilton. Nous utiliserons plutôt celle qui privilégie les multiplications de quaternions dans un ordre naturel. Elle a été proposée par le JPL (Jet Propulsion Laboratory) en 1999 (voir par exemple : W. G. Breckenridge, "Quaternions - Proposed Standard Conventions," JPL, Tech. Rep. INTEROFFICE MEMORANDUM. IOM 343-79-1199, 1999 ;

Nikolas Trawny et Stergios I. Roumeliotis, "Indirect Kalman Filter for 3D Attitude Estimation", A Tutorial for Quaternion Algebra, Department of Computer Science & Engineering, University of Minnesota. Technical Report, 2005-002, Rev. 57, March 2005).

Selon cette notation, le quaternion sera noté $\bar{q}$ et défini comme suit :

$$\overline{q} = \underbrace{q_4}_{\substack{partie \\ réelle}} + \underbrace{q_1\mathbf{i}+q_2\mathbf{j}+q_3\mathbf{k}}_{\substack{partie \\ imaginaire}} \tag{2}$$

En notation matricielle, on peut aussi écrire :

$$\overline{q} = \begin{bmatrix} \mathbf{q} \\ q_4 \end{bmatrix} = \begin{bmatrix} q_1 & q_2 & q_3 & q_4 \end{bmatrix}^T \tag{3}$$

Si $\mathbf{q}$ et $q_4$ remplissent les conditions ci-après, ce qui sera le cas pour tout notre exposé, $\overline{q}$ est dit quaternion unitaire. Il représente alors une rotation d'angle θ autour du vecteur unitaire $\hat{\mathbf{k}}$ :

$$\mathbf{q} = \begin{bmatrix} k_x \sin(\theta/2) \\ k_y \sin(\theta/2) \\ k_z \sin(\theta/2) \end{bmatrix} = \hat{\mathbf{k}}\sin(\theta/2) \quad et \quad q_4 = \cos(\theta/2) \tag{4}$$

Un vecteur $\mathbf{p}$ dans l'espace (3 coordonnées) peut être représenté sous forme de quaternion :

$$\overline{p} = \begin{bmatrix} \mathbf{p} \\ 0 \end{bmatrix} \tag{5}$$

Nous utiliserons les notations suivantes pour préciser les repères de référence dans lesquels les vecteurs s'expriment :

$$^L\mathbf{p} = {}_G^L C(\overline{q})\,^G\mathbf{p} \tag{6}$$

Où :

- $\overline{q} = {}_G^L\overline{q}$

- ${}_G^L C(\overline{q})$ est une matrice de rotation (3x3) qui exprime le repère global {$G$} dans le repère local {$L$}.

Avec cette notation, on peut passer du système de coordonnées du repère local (repère capteur mobile) au global (repère fixe) et inversement par l'expression suivante :

$$^L\overline{p} = {}_G^L\overline{q} \otimes {}^G\overline{p} \otimes {}_G^L\overline{q}^{-1} \tag{7}$$

Nous manipulons des vitesses angulaires du système de coordonnées local {$L$} communément celui du capteur en mouvement par rapport au repère global {$G$}, la dérivée temporelle du quaternion s'exprime à partir de l'expression générale (voir Trawny et Roumeliotis, référence citée ci-dessus) :

$$^L_G\dot{\overline{q}}(t) = \lim_{\Delta t \to 0} \frac{1}{\Delta t}\left( {}^{L(t+\Delta t)}_G\overline{q} - {}^{L(t+\Delta t)}_G\overline{q}(t) \right) \tag{8}$$

Or:

$$^{L(t+\Delta t)}_G\overline{q} = {}^{L(t+\Delta t)}_{L(t)}\overline{q} \otimes {}^{L(t)}_G\overline{q} \tag{9}$$

Où la rotation de {L(t)} à {L(t+Δt)} s'exprime de la façon suivante:

$$\begin{array}{c} L(t+\Delta t) \\ L(t) \end{array} \overline{q} = \begin{bmatrix} \hat{\mathbf{k}} \sin(\theta/2) \\ \cos(\theta/2) \end{bmatrix} \underset{\Delta t \approx 0}{\approx} \begin{bmatrix} \hat{\mathbf{k}} \cdot \theta/2 \\ 1 \end{bmatrix} = \begin{bmatrix} \frac{1}{2} \delta \boldsymbol{\theta} \\ 1 \end{bmatrix} \qquad (10)$$

Le vecteur δθ est de même direction que l'axe de la rotation faisant passer de {L(t)} à {L(t+Δ1t)} et a une magnitude égale à l'angle de rotation. Or, la définition de la vitesse angulaire nous donne :

$$\boldsymbol{\omega} = \lim_{\Delta t \to 0} \frac{\delta \boldsymbol{\theta}}{\Delta t} \qquad (11)$$

Donc, d'après les expressions (8),(9),(10) et (11) :

$$\begin{array}{c} L(t) \\ G \end{array} \dot{\overline{q}} = \frac{1}{2} \begin{bmatrix} \boldsymbol{\omega} \\ 0 \end{bmatrix} \otimes \begin{array}{c} L(t) \\ G \end{array} \overline{q} \qquad (12)$$

Nous aurons besoin d'intégrer un quaternion pour estimer les angles à partir des mesures ω du gyro. Intégrer un quaternion est équivalent à résoudre l'équation différentielle du 1$^{er}$ ordre ci-dessus. Dans Trawny et Roumeliotis, (référence citée ci-dessus), on trouve la solution à l'ordre 0:

$$\begin{array}{c} L \\ G \end{array} \overline{q}(t_{k+1}) = \left( \cos\left( \frac{|\boldsymbol{\omega}|}{2} \Delta t \right) + \frac{1}{|\boldsymbol{\omega}|} \sin\left( \frac{|\boldsymbol{\omega}|}{2} \Delta t \right) \cdot \boldsymbol{\Omega}(\boldsymbol{\omega}) \right) \begin{array}{c} L \\ G \end{array} \overline{q}(t_k) \qquad (13)$$

Où

$$\boldsymbol{\Omega}(\boldsymbol{\omega}) = \begin{bmatrix} 0 & \omega_z & -\omega_y & \omega_x \\ -\omega_z & 0 & \omega_x & \omega_y \\ \omega_y & -\omega_x & 0 & \omega_z \\ -\omega_x & -\omega_y & -\omega_z & 0 \end{bmatrix} \qquad (14)$$

(13) a une expression plus stable lorsque ω→0 :

$$\lim_{|\omega| \to 0} \left( \begin{array}{c} L \\ G \end{array} \overline{q}(t_{k+1}) \right) = \left( I_{4x4} + \frac{\Delta t}{2} \boldsymbol{\Omega}(\boldsymbol{\omega}) \right) \begin{array}{c} L \\ G \end{array} \overline{q}(t_k) \qquad (15)$$

Notons que (13) peut se réécrire aussi :

$$\begin{array}{c} L \\ G \end{array} \overline{q}(t_{k+1}) = \begin{bmatrix} \frac{\boldsymbol{\omega}}{|\boldsymbol{\omega}|} \cdot \sin\left( \frac{|\boldsymbol{\omega}|}{2} \Delta t \right) \\ \cos\left( \frac{|\boldsymbol{\omega}|}{2} \Delta t \right) \end{bmatrix} \otimes \begin{array}{c} L \\ G \end{array} \overline{q}(t_k) \qquad (16)$$

où l'on voit que la solution à $t_{k+1}$ n'est autre que la rotation du repère précédent pris à $t_k$ selon un axe défini par ω avec un angle de rotation égal à |ω|Δt, ce qui correspond à l'hypothèse à l'ordre 0 qui veut que ω est constant entre $t_k$ et $t_{k+1}$.

Un homme du métier de la capture de mouvement pourra consulter la littérature, notamment Trawny et Roumeliotis, (référence citée ci-dessus) pour établir les solutions aux ordres supérieurs (accélération angulaire constante, jerk angulaire constant, etc...).

Le cadre de référence des notations permettant de décrire la présente invention est maintenant posé.

Nous pouvons à présent décrire les étapes du procédé de traitement à l'aide des notations précédemment définies.

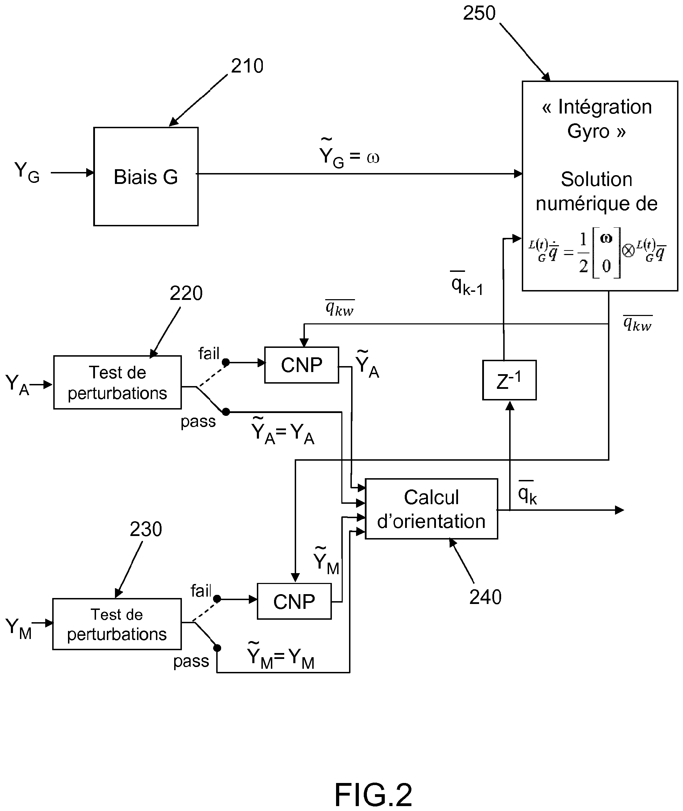

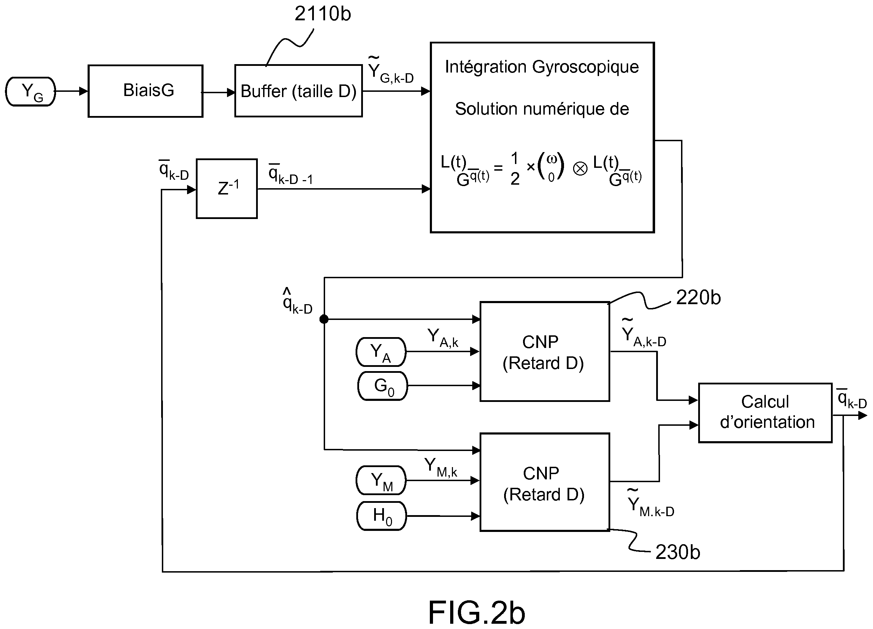

La figure 2 représente une architecture fonctionnelle de mise en oeuvre du procédé de l'invention pour l'échantillon k, dans un de ses modes de réalisation.

Avec les mêmes nommages de variables que dans la référence Black citée plus haut, on peut écrire les modèles de mesure pour les différents capteurs du dispositif considéré (deux capteurs de champs $\mathbf{G_0}$ et $\mathbf{H_0}$ uniformes dans le repère absolu, par exemple un accéléromètre et un magnétomètre, et un capteur représentatif de la vitesse angulaire, par exemple un gyromètre) sous la forme :

$$\begin{pmatrix} \mathbf{Y_G} \\ \mathbf{Y_A} \\ \mathbf{Y_M} \end{pmatrix} = \begin{pmatrix} \boldsymbol{\omega} + \mathbf{b} \\ \overline{q} \otimes (\mathbf{G_0} + \mathbf{a}) \otimes \overline{q}^{-1} \\ \overline{q} \otimes (\mathbf{H_0} + \mathbf{h}) \otimes \overline{q}^{-1} \end{pmatrix} + \begin{pmatrix} \mathbf{v_G} \\ \mathbf{v_A} \\ \mathbf{v_M} \end{pmatrix} \qquad (17)$$

A $t_0$, on peut considérer que le dispositif est dans sa position neutre ou de référence et qu'il est immobile, de sorte que seuls les champs $\mathbf{G_0}$ et $\mathbf{H_0}$ sont mesurés, sans accélération $\mathbf{a}$ ni perturbation $\mathbf{h}$. Le repère capteur se confond avec le repère fixe de référence et, si on néglige les bruits capteurs :

$$\begin{pmatrix} \mathbf{Y_G}(t_0) \\ \mathbf{Y_A}(t_0) \\ \mathbf{Y_M}(t_0) \end{pmatrix} = \begin{pmatrix} 0 \\ {}^G\mathbf{G_0} \\ {}^G\mathbf{H_0} \end{pmatrix} \qquad (18)$$

Cette équation montre qu'on peut enregistrer par la mesure les champs de référence $\mathbf{G_0}$ et $\mathbf{H_0}$ à $t_0$ ou, si on le désire, à chaque fois que $\mathbf{a}$ et $\mathbf{h}$ sont nuls. A $t > t_0$, considérons que le dispositif a quitté sa position neutre et se met en mouvement.

Le principe général des traitements selon l'invention est le suivant :

- Les mesures sont pré-traitées soit pour éliminer le biais (cas du gyromètre), soit pour détecter les perturbations dont elles sont éventuellement affectées ; ces pré-traitements sont similaires à ceux effectués selon l'art antérieur ; ils sont indiqués sur la figure 2 par les références 210, 220 et 230 ;
- Lorsque les mesures en sortie de l'accéléromètre et du magnétomètre (ou d'autres capteurs remplissant les mêmes fonctions, comme indiqué plus haut) ne sont pas perturbées, l'orientation est fournie par un algorithme classique représenté sur la figure 2 par la référence 240 ;
- Lorsqu'une des mesures en sortie d'un de ces capteurs est perturbée, elle est remplacée en entrée de l'algorithme de calcul de l'orientation par une mesure reconstruite à partir du quaternion calculé par un algorithme référencé 250 sur la figure 2, auquel sont fournis la vitesse angulaire en sortie du gyromètre et le quaternion en sortie de l'algorithme de calcul 240 à l'instant k-1.

Les mesures sont donc d'abord pré-traitées :

- Le traitement 210 permet de filtrer le gyromètre pour éliminer son biais $\mathbf{b}$. Ce traitement consiste à évaluer sa variance sur une fenêtre glissante d'une durée choisie T (par exemple 1 seconde). Si la variance reste en deça d'un certain seuil, on peut considérer que le gyromètre ne subit pas de vitesse angulaire. On établit la moyenne sur la fenêtre, ce qui donne une estimée du biais $\mathbf{b}$ sur chaque axe de mesure.
  210 s'exprime donc ainsi:

$$si \; \mathrm{var}\big(Y_G(t_{k-T+1}),...,Y_G(t_k)\big) \leq \alpha_G \Rightarrow \tilde{Y}_G(t_k) = Y_G(t_k) - \langle Y_G \rangle_T$$

$$si \; \mathrm{var}\big(Y_G(t_{k-T+1}),...,Y_G(t_k)\big) > \alpha_G \Rightarrow \tilde{Y}_G(t_k) = Y_G(t_k) \qquad (19)$$

on applique ce procédé préférentiellement à l'initialisation en veillant à ce que le mobile observe une période stable supérieure à T ; néanmoins, le biais peut être calculé en permanence sachant qu'il ne sera rafraîchi que si les conditions de seuil (19) sont respectées; dans (19) , le test est effectué pour chaque axe du gyroscope, ce qui permet de corriger éventuellement un axe lorsqu'aucun mouvement rotatoire n'est observé par ledit axe ; néanmoins, on peut remplacer $Y_G$ par sa norme pour ce test de la variance ; En ce cas, il faut que le mobile observe une position stable absolue (complète) pour que les corrections s'appliquent (par conséquent sur tous les axes) ; on confondra parfois la notation $t_k$ avec la notation k pour désigner l'instant.

- Le traitement 220 permet de tester les mesures de l'accéléromètre (ou d'un capteur équivalent de champ uniforme) ; on applique le test proprement dit de l'existence ou non d'une accélération propre. Pour ce faire, on compare la norme de la mesure $\mathbf{Y}_{A,k}$ à la norme du champ gravitationnel (pour rappel, on travaille en multiple de $G_0$), on fait donc une comparaison par rapport à 1 : Si $|\|\mathbf{Y}_{A,k}\|-1| < \alpha_A$,
Avantageusement, en cas de test positif, on ajoute le test suivant :

$$\left|\hat{a}_{k-1}\right| < \beta_A$$

La comparaison de la norme de l'accélération propre estimée à l'instant k-1, $\hat{a}_{k-1}$, à $\beta_A$, permet avantageusement d'exclure des cas particuliers pour lesquels le premier test ne suffirait pas. En effet, on considère que si à l'instant k-1 l'accélération propre a une valeur élevée, i.e. supérieure à $\beta_A$, il est peu probable qu'à l'instant k l'accélération propre soit inférieure à $\beta_A$. $\alpha_A$ et $\beta_A$ sont par exemple égaux à 0,04 et 0,2 respectivement.
Ce deuxième test améliore donc la précision de l'estimation de la mesure non perturbée $\tilde{\mathbf{Y}}_{A,k}$ et donc de l'estimation de l'orientation. → Si les tests ci-dessus sont positifs, on décide alors que l'accélération propre $\hat{a}_k$ est nulle à l'instant k.

Le raisonnement est le même pour le filtre 230 concernant le magnétomètre (ou un autre capteur équivalent de champ uniforme).
La suite consiste à construire des mesures non perturbées :

- Si les tests précédents 220 ou 230 sont positifs, il n'y a pas de perturbations :

$$si\,test_{220} > 0 \Rightarrow \tilde{Y}_{A,k} = Y_A$$
$$si\,test_{230} > 0 \Rightarrow \tilde{Y}_{M,k} = Y_M \qquad (20)$$

- Si les tests précédents 220 et/ou 230 sont négatifs, il y a des perturbations, on construit alors, via le filtre CNP (Construction Non Perturbée) une mesure artificielle basée sur le ou les champs de référence et sur le quaternion estimé au même instant par le filtre 250, dont le fonctionnement est décrit plus loin. La construction de cette mesure non perturbée s'exprime comme suit (valable pour $\mathbf{Y_A}$ et $\mathbf{Y_M}$) :

$$\tilde{\mathbf{Y}}_k = \overline{q}_k \otimes \mathbf{G_0} \otimes \overline{q}_k^{\,-1} \qquad (21)$$

L'équation ci-dessus s'applique pour $\tilde{\mathbf{Y}}_{Ak}$ autant que pour $\tilde{\mathbf{Y}}_{Mk}$, avec le même formalisme (en utilisant $\mathbf{H_0}$ au lieu de $\mathbf{G_0}$).
Les mesures $\tilde{\mathbf{Y}}_{Ak}$ et $\tilde{\mathbf{Y}}_{Mk}$, sont ensuite directement mises en entrée d'un algorithme de calcul traditionnel d'orientation de type TRIAD (TRI-axial Attitude Determination)
par exemple (cf : http://en.wikipedia.org/wiki/Triad Method
ou publication 1964 de Harold Black déjà citée). Cet algorithme permet d'estimer un quaternion de rotation à partir de la mesure des deux directions de référence fournies par les données $\tilde{\mathbf{Y}}_{Ak}$ et $\tilde{\mathbf{Y}}_{Mk}$. Mais tout autre algorithme permettant de calculer l'orientation d'un objet dans un repère de référence à partir de sa position par rapport aux vecteurs champ gravitationnel et champ magnétique terrestres (ou de tout autre champ uniforme) peut remplacer l'algorithme TRIAD. En particulier, dans le cas de plus de deux capteurs, un algorithme de type QUEST (Quaternion ESTimator), décrit notamment dans la publication http://www.dept.aoe.vt.edu/~cdhall/courses/aoe4140/attde.pdf et, en comparaison avec TRIAD dans http://www.malcolmdshuster.com/comm 1981a J TRIAD-QUEST.pdf
Il est également possible d'utiliser d'autres algorithmes remplissant la même fonction technique, par exemple un algorithme de descente de gradient tel que celui divulgué par la demande de brevet internationale publiée sous le numéro WO03085357.

Le quaternion $\overline{q}_k$ résultant est la réponse de notre système pour fournir l'orientation du dispositif.

Cette estimation $\overline{q}_k$ est ensuite ré-introduite dans le système d'intégration 250. Ce traitement permet de considérer l'attitude estimée actuelle $\overline{q}_k$ et de mettre à jour à l'instant k+1 grâce à la mesure de vitesse angulaire du gyromètre et la rotation élémentaire qui en découle entre k et k+1. D'après (16), le nouveau quaternion est donné par :

$$
{}_{G}^{L}\overline{q}(t_{k+1}) = \begin{bmatrix} \dfrac{\boldsymbol{\omega}}{|\boldsymbol{\omega}|} \cdot \sin\left( \dfrac{|\boldsymbol{\omega}|}{2} \Delta t \right) \\[2mm] \cos\left( \dfrac{|\boldsymbol{\omega}|}{2} \Delta t \right) \end{bmatrix} \otimes {}_{G}^{L}\overline{q}(t_k)
\tag{22}
$$

La figure 2b représente une variante de l'architecture fonctionnelle de la figure 2, dans certains de ses modes de réalisation.

Dans cette variante, on introduit entre le module de calcul du biais du gyromètre 210 (ou module de débiaisage) et le module d'intégration du gyromètre 250, un buffer 2110b qui crée une fenêtre temporelle de durée D destinée à optimiser la fonction de test d'occurrence des perturbations de l'accéléromètre et du magnétomètre.

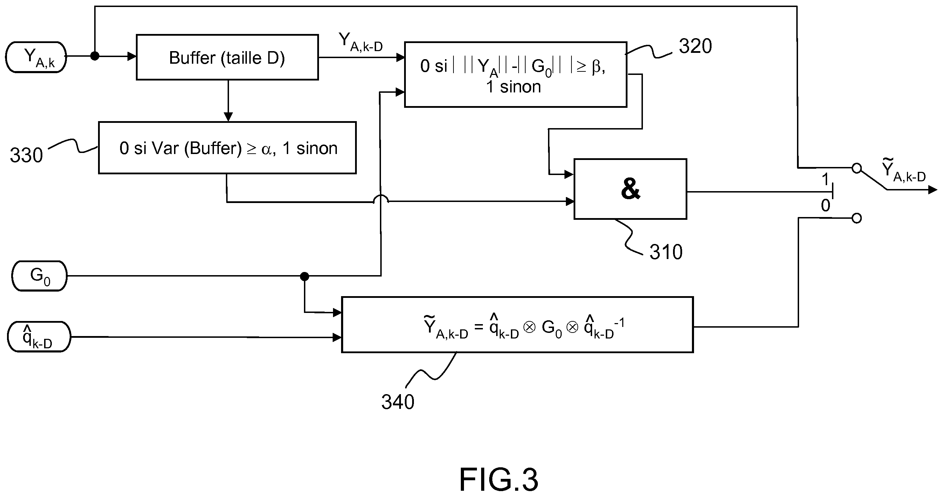

Les modules CNP, 220b pour l'accéléromètre et 230b pour le magnétomètre, de Construction Non Perturbée intègrent les fonctions de test, comme détaillé dans la figure 3.

La figure 3 représente un détail de la figure 2b.

Est représentée sur la figure la constitution du module CNP 220b, de Construction Non perturbée des mesures de l'accéléromètre de la figure 2b. La mesure en entrée de CNP est $Y_{A,k}$ La sortie $\tilde{Y}_{A,k}$ de CNP est la valeur exploitée par l'algorithme de calcul d'orientation 240, de type TRIAD ou QUEST, par exemple.

On crée un buffer 310 pour stocker les échantillons du signal de mesure de champ sur une durée D identique au retard introduit sur le signal gyromètre débiaisé.

Le test de perturbation de la mesure $Y_{A,k}$ consiste à fournir la bascule 1/0 sur la ligne après le & 320. Cette bascule consiste à réaliser le filtre suiveur de l'entrée vers la sortie (1=pas de perturbation) ou la mesure reconstruite par la rotation estimée du gyromètre seul. Ce test est par exemple la conjonction de 2 conditions :

- Test 330 : la norme de l'accéléromètre est en moyenne (sur la fenêtre D) proche ($<\alpha$) de celle de la gravité, $G_0$ ;
- Test 340 : la variance du signal sur la fenêtre D est faible ($<\beta$).

La Construction Non Perturbée est fournie en sortie de la boîte 350 par la formule suivante :

$$
\tilde{\mathbf{Y}}_{A,k-D} = \tilde{q}_{k-D} \otimes \mathbf{G_0} \otimes \tilde{q}_{k-D}{}^{-1}
$$

Le module 230b de Construction Non Perturbée des mesures du magnétomètre de la figure 2b est similaire au module 220b représenté en détail sur la figure 3. Cependant, $Y_{A,k}$ est remplacé par $Y_{M,K}$ ; $\tilde{Y}_{A,k}$ est remplacé par $\tilde{Y}_{M,k}$ ; $G_0$ est remplacé par $H_0$.

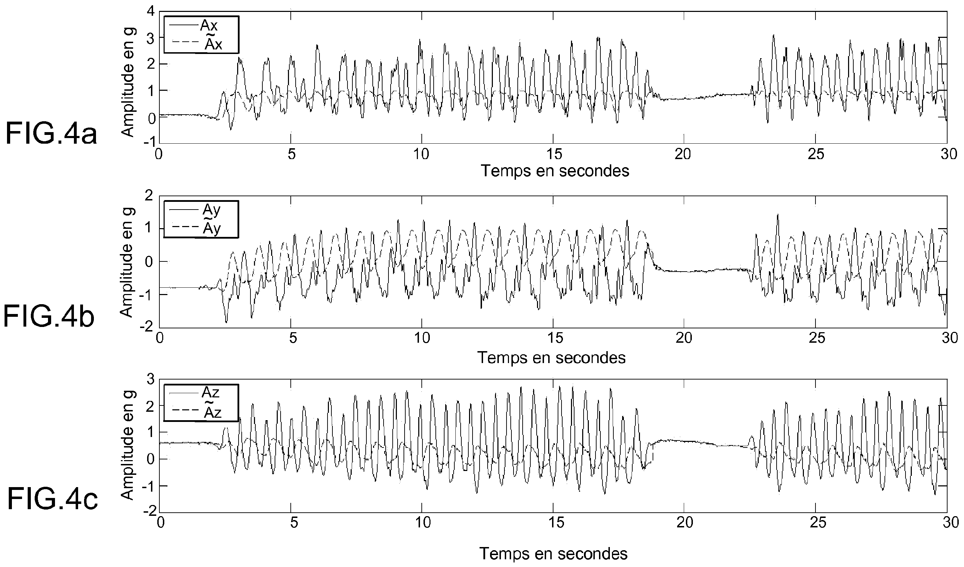

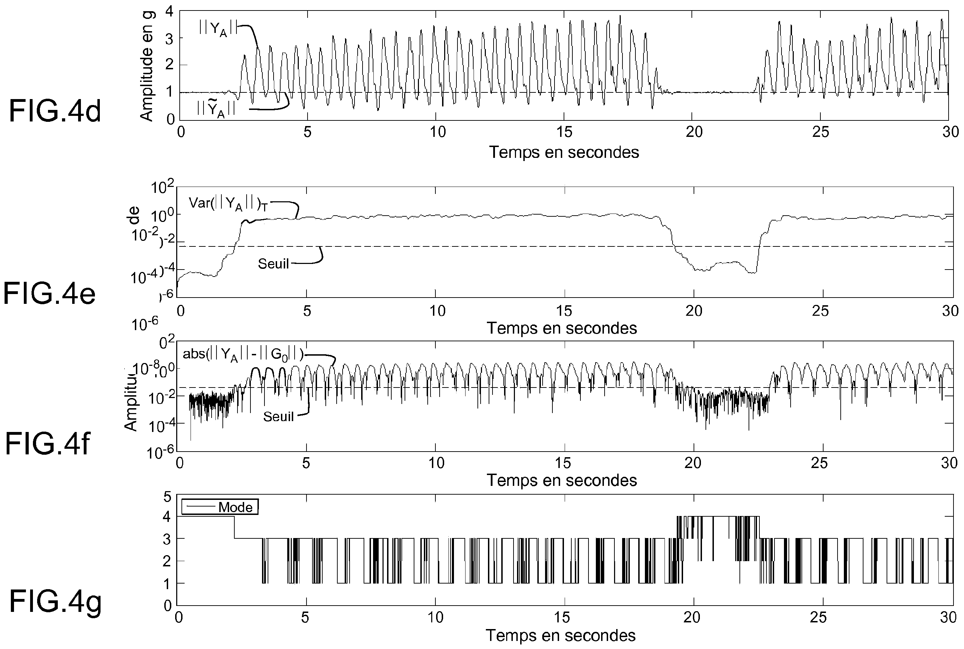

Les figures 4a à 4g représentent des mesures réalisées sur un accéléromètre lors de la mise en œuvre de l'invention dans l'architecture de la figure 2b.

Sur ces figures, on voit l'effet du remplacement des mesures de l'accéléromètre par leur reconstruction basée sur l'intégration du gyromètre. Les courbes sont superposées en compensant le retard introduit.

En présence de perturbations (accélérations propres), le filtre CNP met son interrupteur à 1. On constate que les courbes en pointillé des figures 4a, 4b et 4c (reconstruites sur les axes x, y et z) diffèrent lors de ces phases des courbes en trait plein et qu'elles sont beaucoup moins énergétiques, ne comportant alors plus que les composantes en orientation des mesures de l'accéléromètre.

Le capteur est secoué, ce qui ajoute de l'accélération propre au-delà de la gravité mais maintient des changements d'orientation dans le signal. Par construction la norme de $\tilde{Y}_{A,k}$ (somme des carrés des 3 courbes en pointillé selon les trois axes) reste celle de $G_0$=1g.

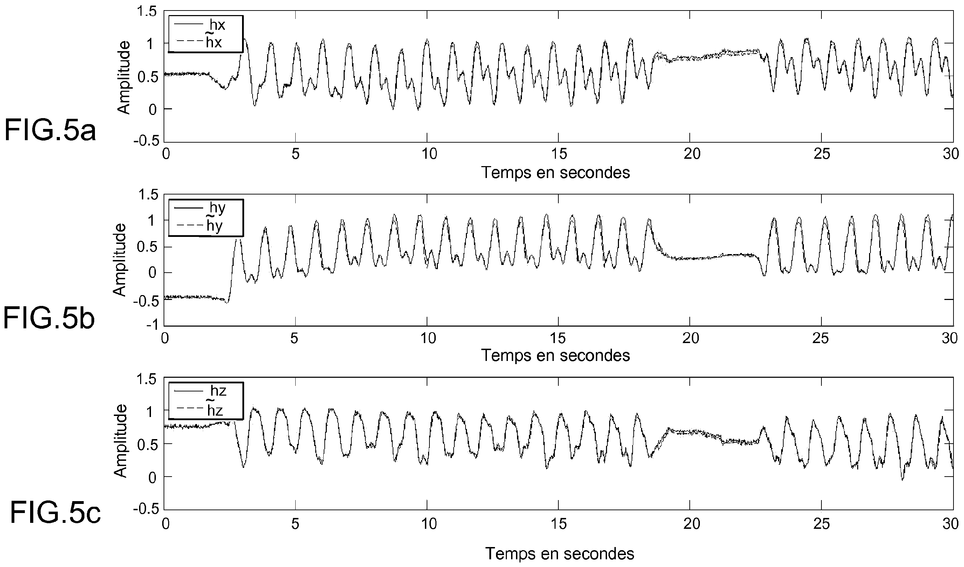

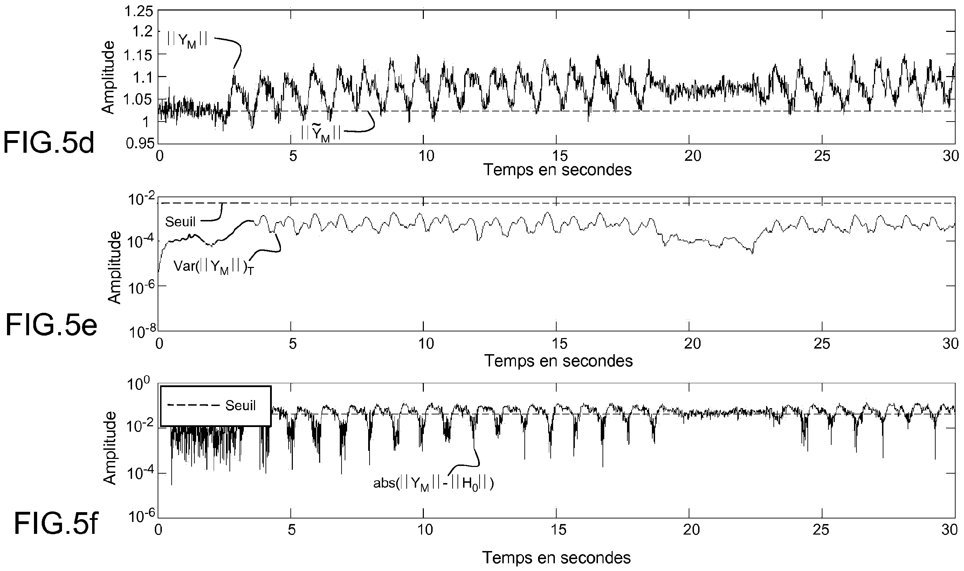

Les figures 5a à 5f représentent des mesures réalisées sur un magnétomètre lors de la mise en œuvre de l'invention dans l'architecture de la figure 2b.

Ces enregistrements sont effectués lors du même mouvement que celui représenté sur les figures 4a à 4g. On s'intéresse au magnétomètre. Lors du mouvement, le capteur ne fait manifestement pas l'expérience de grosses perturbations magnétiques, ce qui a pour conséquence d'observer peu de différences entre les courbes de mesures et celles de reconstruction.

Les exemples décrits ci-dessus sont donnés à titre d'illustration de modes de réalisation de l'invention. Ils ne limitent en aucune manière le champ de l'invention qui est défini par les revendications qui suivent.

**Revendications**

1. Procédé d'estimation de l'orientation d'un objet comprenant une centrale d'attitude à un instant k, ledit procédé comprenant :

- une première étape d'utilisation d'au moins i deux capteurs de la centrale d'attitude, lesdits capteurs étant fixés à l'objet, pour effectuer au moins une mesure ($y_A$, $y_M$) d'au moins une valeur d'au moins un champ physique substantiellement uniforme dans le temps et dans l'espace, et des mesures de la vitesse de rotation ($y_G$) dudit objet ;
- une deuxième étape de détection (220, 230) de la présence de perturbations dans ladite au moins une mesure dudit au moins un champ physique ;
- et, si une perturbation dans ladite au moins une mesure ($y_A$, $y_M$) est détectée en sortie de ladite deuxième étape :

  ◦ une troisième étape (250) d'estimation d'un quaternion ($\overline{q_{kw}}$) d'orientation dudit objet en appliquant une intégration d'une sortie corrigée de la mesure de vitesse de rotation de l'objet à partir d'un quaternion calculé d'orientation dudit objet, à l'instant k-1, en sortie d'une étape (240) de calcul d'un quaternion d'orientation de l'objet et
  ◦ une quatrième étape (CNP) de calcul d'une mesure artificielle de ladite au moins une valeur de l'au moins un champ physique basée sur ledit quaternion ($\overline{q_{kw}}$) d'orientation estimé dudit objet en sortie de la troisième étape (230) et une valeur de référence dudit au moins un champ physique ;

- l'étape (240) de calcul d'un quaternion ($q_k$) d'orientation dudit objet dans l'espace utilisant au moins :

  ◦ si une perturbation dans ladite au moins une mesure ($y_A$, $y_M$) est détectée en sortie de ladite deuxième étape (220, 230), ladite mesure artificielle de ladite au moins une valeur de l'au moins un champ physique ;
  ◦ sinon, ladite au moins une mesure ($y_A$, $y_M$) de l'au moins une valeur de l'au moins un champ physique.

2. Procédé selon la revendication 1, **caractérisé en ce que** le au moins un champ physique est la gravité terrestre.

3. Procédé selon la revendication 1, **caractérisé en ce que** le au moins un champ physique est le champ magnétique terrestre.

4. Procédé selon la revendication 1, **caractérisé en ce qu'**il utilise des mesures d'au moins deux champs physiques, la gravité terrestre et le champ magnétique terrestre.

5. Procédé selon la revendication 1, **caractérisé en ce qu'**il utilise des mesures d'un seul champ physique et des valeurs d'un champ synthétique construites à partir dudit seul champ physique, ledit champ synthétique étant défini tel qu'il ait au moins une composante orthogonale audit champ physique et que son produit vectoriel avec ledit champ physique soit non nul.

6. Procédé selon la revendication 5, **caractérisé en ce que** ledit champ physique est la gravité G0 et ledit champ synthétique est un vecteur constitué par une combinaison linéaire de ladite gravité G0 et d'un vecteur non nul choisi dans un plan orthogonal à G0.

7. Procédé selon la revendication 5, **caractérisé en ce que** ledit champ physique est le champ magnétique terrestre H0 et ledit champ synthétique est un vecteur constitué par une combinaison linéaire dudit champ magnétique terrestre H0 et d'un vecteur non nul choisi dans un plan orthogonal à H0.

8. Procédé selon l'une des revendications 1 à 7, **caractérisé en ce qu'**il comprend en outre dans la première étape, une sous-étape de correction (210) de la vitesse de rotation ($y_{G,k}$) consistant à retrancher aux mesures de ladite vitesse de rotation un biais moyen ($\hat{b}_{moyen}$) déterminé lors d'une étape de position au repos et à lui substituer une vitesse de rotation corrigée ($\tilde{y}_{G,k}$).

**9.** Procédé selon la revendication 8, **caractérisé en ce que** la sous-étape (210) de correction est suivie par une étape (2110b) de stockage d'échantillons du signal sur une durée D.

**10.** Procédé selon l'une des revendications 1 à 9, **caractérisé en ce que** la deuxième étape de détection (220, 230) d'une perturbation dans les mesures dudit au moins un champ consiste à déterminer si la différence de la norme des mesures ($y_A$, $y_M$) dudit au moins un champ et de leurs valeurs de référence ($G_0$, $H_0$) est supérieure à une valeur de seuil choisie ($\alpha_A$, $\alpha_M$).

**11.** Procédé selon les revendications 9 et 10, **caractérisé en ce que** la deuxième étape de détection d'une perturbation dans les mesures dudit au moins un champ consiste à déterminer en outre si la variance des échantillons ($y_{A,k}$, $y_{M,k}$) du signal de mesure dudit champ stockés dans un buffer de durée D est supérieure à une valeur de seuil choisie ($\beta_A$, $\beta_M$)

**12.** Procédé selon l'une des revendications 1 à 11, **caractérisé en ce que** l'étape supplémentaire de calcul d'un quaternion ($\overline{q_k}$) d'orientation dudit objet s'effectue par composition d'au moins deux mesures de champs physiques en sortie de la première étape et utilise un algorithme de type TRIAD.

**13.** Procédé selon l'une des revendications 1 à 12, **caractérisé en ce que** l'étape supplémentaire de calcul d'un quaternion ($\overline{q_k}$) d'orientation dudit objet s'effectue par composition de mesures de plus de deux mesures de champs physiques en sortie de la première étape et utilise un algorithme de type QUEST.

**14.** Procédé selon l'une des revendications 1 à 13, **caractérisé en ce que** la troisième étape d'intégration d'une sortie corrigée de la mesure de vitesse de l'objet à partir d'un quaternion d'orientation dudit objet en sortie de la deuxième étape à l'instant k-1 est effectuée par résolution de l'équation différentielle :

$$ {}^{L(t)}_{G}\dot{\overline{q}} = \frac{1}{2}\begin{bmatrix} \boldsymbol{\omega} \\ 0 \end{bmatrix} \otimes {}^{L(t)}_{G}\overline{q} $$

**15.** Procédé selon l'une des revendications 1 à 14, **caractérisé en ce que** le quaternion estimé de l'objet en sortie de la deuxième étape est normalisé.

**16.** Centrale d'attitude d'un objet comprenant des moyens de mesure d'au moins un champ physique ($y_A$, $y_M$) et de la vitesse de rotation ($y_G$) dudit objet, ladite centrale comprenant :

    - un premier module d'utilisation d'au moins deux capteurs de a centrale d'attitude, lesdits capteurs étant fixés à l'objet, pour effectuer au moins une mesure ($y_A$, $y_M$) d'au moins une valeur d'au moins un champ physique substantiellement uniforme dans le temps et dans l'espace, et des mesures de la vitesse de rotation ($y_G$) dudit objet ;
    - un deuxième module de prétraitement à l'instant k pour détecter la présence de perturbations dans ladite au moins une mesure de l'au moins un champ physique ($y_A$, $y_M$) ;
    - un troisième module d'estimation d'un quaternion ($\overline{q_{kw}}$) d'orientation dudit objet en appliquant une intégration d'une sortie corrigée de la mesure de vitesse de rotation de l'objet à partir d'un quaternion d'orientation calculé dudit objet, à l'instant k-1, en sortie d'un module de calcul d'un quaternion d'orientation de l'objet
    - un quatrième module de calcul d'une mesure artificielle de ladite au moins une valeur de l'au moins un champ physique basée sur ledit quaternion ($\overline{q_{kw}}$) d'orientation estimé dudit objet en sortie du troisième module et une valeur de référence dudit au moins un champ physique ; le module de calcul d'un quaternion ($q_k$) d'orientation dudit objet dans l'espace utilisant au moins :

        ∘ si une perturbation dans ladite au moins une mesure ($y_A$, $y_M$) est détectée en sortie dudit deuxième module, ladite mesure artificielle de ladite au moins une valeur de l'au moins un champ physique ;
        ∘ sinon, ladite au moins une mesure ($y_A$, $y_M$) de l'au moins une valeur de l'au moins un champ physique.

**Patentansprüche**

1. Verfahren zur Schätzung der Ausrichtung eines Objekts, welches eine Lagesteuerungsbaugruppe zu einem Zeitpunkt k umfasst, wobei das Verfahren Folgendes umfasst:

   - einen ersten Schritt der Verwendung von mindestens zwei Sensoren der Lagesteuerungsbaugruppe, wobei die Sensoren an dem Objekt befestigt sind, um mindestens eine Messung ($y_A$, $y_M$) mindestens eines Wertes mindestens eines physikalischen Feldes, welches im Wesentlichen einheitlich in Zeit und Raum ist, und Messungen der Drehgeschwindigkeit ($y_G$) des Objekts durchzuführen;
   - einen zweiten Schritt der Erkennung (220, 230) des Vorliegens von Störungen in der mindestens einen Messung des mindestens einen physikalischen Feldes;
   - und, wenn eine Störung in der mindestens einen Messung ($y_A$, $y_M$) am Ausgang des zweiten Schrittes erkannt wird:

     ◦ einen dritten Schritt (250) der Schätzung einer Quaternion ($\overline{q_{kw}}$)der Ausrichtung des Objekts unter Anwendung einer Integration einer korrigierten Ausgabe der Drehgeschwindigkeit des Objekts anhand einer berechneten Quaternion einer Ausrichtung des Objekts, zum Zeitpunkt k-1, am Ausgang eines Schrittes (240) der Berechnung einer Quaternion der Ausrichtung des Objekts; und
     ◦ einen vierten Schritt (CNP) der Berechnung einer künstlichen Messung des mindestens einen Wertes des mindestens einen physikalischen Feldes, basierend auf der geschätzten Quaternion ($\overline{q_{kw}}$) der Ausrichtung des Objekts am Ausgang des dritten Schrittes (230) und eine Referenzwert des mindestens einen physikalischen Feldes;

   - wobei der Schritt (240) der Berechnung einer Quaternion ($q_k$) der Ausrichtung des Objekts im Raum mindestens Folgendes verwendet:

     ◦ wenn eine Störung der mindestens einen Messung ($y_A$, $y_M$) am Ausgang des zweiten Schrittes (220, 230) erkannt wird, die künstliche Messung des mindestens einen Wertes des mindestens einen physikalischen Feldes;
     ◦ ansonsten, die mindestens eine Messung ($y_A$, $y_M$) des mindestens einen Wertes des mindestens einen physikalischen Feldes.

2. Verfahren nach Anspruch 1, **dadurch gekennzeichnet, dass** das mindestens eine physikalische Feld die terrestrische Schwerkraft ist.

3. Verfahren nach Anspruch 1, **dadurch gekennzeichnet, dass** das mindestens eine physikalische Feld das terrestrische Magnetfeld ist.

4. Verfahren nach Anspruch 1, **dadurch gekennzeichnet, dass** es Messungen mindestens zweier physikalischer Felder, nämlich der terrestrischen Schwerkraft und des terrestrischen Magnetfeldes, verwendet.

5. Verfahren nach Anspruch 1, **dadurch gekennzeichnet, dass** es Messungen eines einzigen physikalischen Feldes und Werte eines synthetischen Feldes verwendet, welche anhand des alleinigen physikalischen Feldes konstruiert wurden, wobei das synthetische Feld so definiert ist, dass es mindestens eine zu dem physikalischen Feld rechtwinklige Komponente aufweist, und sein Vektorprodukt mit dem physikalischen Feld ungleich null ist.

6. Verfahren nach Anspruch 5, **dadurch gekennzeichnet, dass** das physikalische Feld die Schwerkraft G0 ist, und das synthetische Feld ein Vektor ist, gebildet aus einer linearen Kombination der Schwerkraft G0 und einem Vektor ungleich null, welcher in einer zu G0 rechtwinkligen Ebene gewählt ist.

7. Verfahren nach Anspruch 5, **dadurch gekennzeichnet, dass** das physikalische Feld das terrestrische Magnetfeld H0 ist, und das synthetische Feld ein Vektor ist, gebildet aus einer linearen Kombination des terrestrischen Magnetfeldes H0 und eines Vektors ungleich null, welcher in einer zu H0 rechtwinkligen Ebene gewählt ist.

8. Verfahren nach einem der Ansprüche 1 bis 7, **dadurch gekennzeichnet, dass** es ferner in dem ersten Schritt einen Teilschritt der Korrektur (210) der Drehgeschwindigkeit ($y_{G,k}$) umfasst, welcher darin besteht, von den Messungen der Drehgeschwindigkeit einen durchschnittlichen Bias ($b_{Durchschnitt}$) abzuziehen, welcher im Zuge eines Schrittes der Ruheposition bestimmt wird, und dieser eine korrigierte Drehgeschwindigkeit ($\tilde{y}_{G,k}$) zu substituieren.

9. Verfahren nach Anspruch 8, **dadurch gekennzeichnet, dass** der Teilschritt (210) der Korrektur durch einen Schritt (2110b) der Speicherung von Abtastwerten des Signals über eine Dauer D gefolgt ist.

10. Verfahren nach einem der Ansprüche 1 bis 9, **dadurch gekennzeichnet, dass** der zweite Schritt der Erkennung (220, 230) einer Störung in den Messungen des mindestens einen Feldes darin besteht, zu bestimmen, ob die Differenz der Norm der Messungen ($y_A$, $y_M$) des mindestens einen Feldes und ihrer Referenzwerte ($G_0$, $H_0$) einen gewählten Schwellenwert ($\alpha_A$, $\alpha_M$) überschreitet.

11. Verfahren nach den Ansprüchen 9 und 10, **dadurch gekennzeichnet, dass** der zweite Schritt der Erkennung einer Störung in den Messungen des mindestens einen Feldes darin besteht, ferner zu bestimmen, ob die Varianz der Abtastwerte ($y_{A,k}$, $y_{M,k}$) des Messsignals des Feldes, welche in einem Puffer der Dauer D gespeichert sind, einen gewählten Schwellenwert ($\beta_A$, $\beta_M$) überschreitet.

12. Verfahren nach einem der Ansprüche 1 bis 11, **dadurch gekennzeichnet, dass** der zusätzliche Schritt der Berechnung einer Quaternion ($\overline{q_k}$) der Ausrichtung des Objekts durch Zusammensetzung mindestens zweier Messungen von physikalischen Feldern am Ausgang des ersten Schrittes erfolgt und einen Algorithmus vom Typ TRIAD verwendet.

13. Verfahren nach einem der Ansprüche 1 bis 12, **dadurch gekennzeichnet, dass** der zusätzliche Schritt der Berechnung einer Quaternion ($\overline{q_k}$) der Ausrichtung des Objekts durch Zusammensetzung von mehr als zwei Messungen von physikalischen Feldern am Ausgang des ersten Schrittes erfolgt und einen Algorithmus vom Typ QUEST verwendet.

14. Verfahren nach einem der Ansprüche 1 bis 13, **dadurch gekennzeichnet, dass** der dritte Schritt der Integration eines korrigierten Ausgabenwertes der Geschwindigkeitsmessung des Objekts anhand einer Quaternion der Ausrichtung des Objekts am Ausgang des zweiten Schrittes zum Zeitpunkt k-1 durch die Lösung der folgenden Differenzialgleichungen erfolgt:

$$ {}^{L(t)}_{G}\dot{\overline{q}} = \frac{1}{2}\begin{bmatrix} \boldsymbol{\omega} \\ 0 \end{bmatrix} \otimes {}^{L(t)}_{G}\overline{q} $$

15. Verfahren nach einem der Ansprüche 1 bis 14, **dadurch gekennzeichnet, dass** die geschätzte Quaternion des Objekts nach Ausgang des zweiten Schrittes normalisiert ist.

16. Lagesteuerungsbaugruppe eines Objekts, welche Mittel zum Messen mindestens eines physikalischen Feldes ($y_A$, $y_M$) und der Drehgeschwindigkeit ($y_G$) des Objekts umfasst, wobei die Lagesteuerungsbaugruppe Folgendes umfasst:

- ein erstes Modul zur Verwendung von mindestens zwei Lagesteuerungsbaugruppen-Sensoren, wobei die Sensoren an dem Objekt befestigt sind, um mindestens eine Messung ($y_A$, $y_M$) mindestens eines Wertes mindestens eines physikalischen Feldes durchzuführen, welches im Wesentlichen einheitlich in Zeit und Raum ist, und von Messungen der Drehgeschwindigkeit ($y_G$) des Objekts;
- eine zweites Modul zur Vorbehandlung zum Zeitpunkt k zur Erkennung des Vorliegens von Störungen in der mindestens einen Messung des mindestens einen physikalischen Feldes ($y_A$, $y_M$);
- ein drittes Modul zur Schätzung einer Quaternion ($\overline{q_{kw}}$)der Ausrichtung des Objekts unter Anwendung einer Integration eine korrigierten Ausgabe der Drehgeschwindigkeit des Objekts anhand einer berechneten Quaternion einer Ausrichtung des Objekts, zum Zeitpunkt k-1, am Ausgang eines Moduls zur Berechnung einer Quaternion der Ausrichtung des Objekts;
- ein viertes Modul zur Berechnung einer künstlichen Messung des mindestens einen Wertes des mindestens einen physikalischen Feldes, basierend auf der geschätzten Quaternion ($\overline{q_{kw}}$) der Ausrichtung des Objekts am Ausgang des dritten Moduls oder eines Referenzwertes des mindestens einen physikalischen Feldes;

wobei das Modul zur Berechnung einer Quaternion ($q_k$) der Ausrichtung des Objekts im Raum mindestens Folgendes verwendet:

∘ wenn eine Störung der mindestens einen Messung ($y_A$, $y_M$) am Ausgang des zweiten Schrittes (220, 230) erkannt wird, die künstliche Messung des mindestens einen Wertes des mindestens einen physikalischen Feldes;

∘ ansonsten, die mindestens eine Messung ($y_A$, $y_M$) des mindestens einen Wertes des mindestens einen physikalischen Feldes.

**Claims**

1. A method for estimating the orientation of an object comprising an attitude control system at an instant k, said method comprising:

   - a first step of using at least two sensors of the attitude control system, said sensors being fixed to the object, to carry out at least one measurement ($y_A$, $y_M$) of at least one value of at least one physical field that is substantially uniform in time and in space and measurements of the rotation speed ($y_G$) of said object;
   - a second step (220, 230) of detecting the presence of disturbances in said at least one measurement of said at least one physical field;
   - and, if a disturbance in said at least one measurement ($y_A$, $y_M$) is detected at the output of said second step:

     ∘ a third step (250) of estimating an orientation quaternion ($\overline{q_{kw}}$) of said object by applying an integration of a corrected output of the measurement of the rotation speed of the object on the basis of a computed orientation quaternion of said object, at the instant k-1, at the output of a step (240) of computing an orientation quaternion of the object; and
     ∘ a fourth step (CNP) of computing an artificial measurement of said at least one value of the least one physical field based on said estimated orientation quaternion ($\overline{q_{kw}}$) of said object at the output of the third step (230) and a reference value of said at least one physical field;

   - the step (240) of computing an orientation quaternion ($q_k$) of said object in space using at least:

     ∘ said artificial measurement of said at least one value of the at least one physical field, if a disturbance in said at least one measurement ($y_A$, $y_M$) is detected at the output of said second step (220, 230);
     ∘ otherwise, said at least one measurement ($y_A$, $y_M$) of the at least one value of the at least one physical field.

2. The method as claimed in claim 1, **characterised in that** the at least one physical field is the terrestrial gravity.

3. The method as claimed in claim 1, **characterised in that** the at least one physical field is the terrestrial magnetic field.

4. The method as claimed in claim 1, **characterised in that** it uses measurements of at least two physical fields, the terrestrial gravity and the terrestrial magnetic field.

5. The method as claimed in claim 1, **characterised in that** it uses measurements of a single physical field and values of a synthetic field constructed on the basis of said single physical field, said synthetic field being defined such that it has at least one component orthogonal to said physical field and such that its vector product with said physical field is non-zero.

6. The method as claimed in claim 5, **characterised in that** said physical field is gravity G0 and said synthetic field is a vector made up of a linear combination of said gravity G0 and of a non-zero vector selected in a plane orthogonal to G0.

7. The method as claimed in claim 5, **characterised in that** said physical field is the terrestrial magnetic field H0 and said synthetic field is a vector made up of a linear combination of said terrestrial magnetic field H0 and of a non-zero vector selected in a plane orthogonal to H0.

8. The method as claimed in any one of claims 1 to 7, **characterised in that** it further comprises, in the first step, a sub-step (210) of correcting the rotation speed ($y_{G,k}$) that involves subtracting an average bias ($\hat{b}_{average}$) from the measurements of said rotation speed, which bias is determined during a rest position step, and substituting it with a corrected rotation speed ($\tilde{y}_{G,k}$).

9. The method as claimed in claim 8, **characterised in that** the correction sub-step (210) is followed by a step (2110b) of storing samples of the signal over a duration D.

10. The method as claimed in any one of claims 1 to 9, **characterised in that** the second step (220, 230) of detecting a disturbance in the measurements of said at least one field involves determining whether the difference in the norm of the measurements ($y_A$, $y_M$) of said at least one field and of their reference values ($G_0$, $H_0$) is greater than a selected threshold value ($\alpha_A$, $\alpha_M$).

11. The method as claimed in claims 9 and 10, **characterised in that** the second step of detecting a disturbance in the measurements of said at least one field involves also determining whether the variance of the samples ($y_{A,k}$, $y_{M,k}$) of the measurement signal of said field stored in a duration buffer D is greater than a selected threshold value ($\beta_A$, $\beta_M$).

12. The method as claimed in any one of claims 1 to 11, **characterised in that** the additional step of computing an orientation quaternion ($\overline{q_k}$) of said object is carried out by composing at least two measurements of physical fields at the output of the first step and uses an algorithm of the TRIAD type.

13. The method as claimed in any one of claims 1 to 12, **characterised in that** the additional step of computing an orientation quaternion ($\overline{q_k}$) of said object is carried out by composing measurements of more than two measurements of physical fields at the output of the first step and uses an algorithm of the QUEST type.

14. The method as claimed in any one of claims 1 to 13, **characterised in that** the third step of integrating a corrected output of the speed measurement of the object on the basis of an orientation quaternion of said object at the output of the second step at the instant k-1 is carried out by resolving the differential equation:

$$ _G^{L(t)}\dot{\overline{q}} = \frac{1}{2}\begin{bmatrix}\boldsymbol{\omega}\\0\end{bmatrix}\otimes\ _G^{L(t)}\overline{q} $$

.

15. The method as claimed in any one of claims 1 to 14, **characterised in that** the estimated quaternion of the object at the output of the second step is normalised.

16. An attitude control system of an object comprising means for measuring at least one physical field ($y_A$, $y_M$) and the rotation speed ($y_G$) of said object, said control system comprising:

   - a first module for operating at least two sensors of the attitude control system, said sensors being fixed to the object, to carry out at least one measurement ($y_A$, $y_M$) of at least one value of at least one physical field that is substantially uniform in time and in space, and measurements of the rotation speed ($y_G$) of said object;
   - a second module for pre-processing, at the instant k, for detecting the presence of disturbances in said at least one measurement of the at least one physical field ($y_A$, $y_M$);
   - a third module for estimating an orientation quaternion ($\overline{q_{kw}}$) of said object by applying an integration of a corrected output of the measurement of the rotation speed of the object on the basis of a computed orientation quaternion of said object, at the instant k-1, at the output of a module for computing an orientation quaternion of the object;
   - a fourth module for computing an artificial measurement of said at least one value of the least one physical field based on said estimated orientation quaternion ($\overline{q_{kw}}$) of said object at the output of the third module and a reference value of said at least one physical field;

   the module for computing an orientation quaternion ($q_k$) of said object in space using at least:

   ◦ said artificial measurement of said at least one value of the at least one physical field, if a disturbance in said at least one measurement ($y_A$, $y_M$) is detected at the output of said second module;
   ◦ otherwise, said at least one measurement ($y_A$, $y_M$) of the at least one value of the at least one physical field.

$y_{G,k}$

$\hat{b}_{moyen}$

$y_{A,k}$      $y_{G,k}$      $y_{M,k}$

$\widetilde{y}_{A,k}, \ \widetilde{y}_{G,k}, \ \widetilde{y}_{M,k}$

$\hat{q}_{k}$

FIG.1

FIG.2

EP 2 718 670 B1

$$\frac{L(t)}{G}\overline{q}(t) = \frac{1}{2} \times \begin{pmatrix} \omega \\ 0 \end{pmatrix} \otimes \frac{L(t)}{G}\overline{q}(t)$$

FIG.2b

FIG.3

FIG.4a

FIG.4b

FIG.4c

EP 2 718 670 B1

FIG.4d

FIG.4e

FIG.4f

FIG.4g

EP 2 718 670 B1

FIG.5a

FIG.5b

FIG.5c

EP 2 718 670 B1

FIG.5d

FIG.5e

FIG.5f

EP 2 718 670 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010007160 A
- EP 1984696 A
- WO 03085357 A

**Littérature non-brevet citée dans la description**

- **SABATINI A.M.** Quaternion-based extended Kalman filter for détermination orientation by inertial and magnetic sensing. *IEEE Transactions on Biomedical Engineering,* 2006, vol. 53 (7
- **HAROLD D. BLACK.** A passive system for determining the attitude of a satellite. *American Institute of Aeronautics and Astronautics Journal,* Juillet 1964, vol. 2 (7), 1350-1351
- **W. G. BRECKENRIDGE.** Quaternions - Proposed Standard Conventions. *JPL, Tech. Rep. INTEROFFICE MEMORANDUM. IOM 343-79-1199,* 1999
- Indirect Kalman Filter for 3D Attitude Estimation. **NIKOLAS TRAWNY ; STERGIOS I. ROUMELIOTIS.** A Tutorial for Quaternion Algebra, Department of Computer Science & Engineering. University of Minnesota. Technical Report, Mars 2005